# EUROPEAN PATENT APPLICATION

(11) **EP 4 456 177 A2**
(43) Date of publication of application: **30.10.2024**
(21) Application number: 24172798.1
(22) Date of filing: 26.04.2024
(51) Int. Cl.: H01M 4/133, H01M 4/36, H01M 4/62

(54) **ANODE ACTIVE MATERIAL FOR SECONDARY BATTERY, ANODE INCLUDING THE SAME, AND SECONDARY BATTERY INCLUDING THE SAME**

(30) Priority: 28.04.2023 KR 20230056335
(71) Applicant: SK On Co., Ltd., Seoul 03161 (KR); SK Innovation Co., Ltd., Seoul 03188 (KR)
(72) Inventor: KIM, Hyeon A, 34124 Daejeon (KR); MOON, Gi Hyeon, 34124 Daejeon (KR); LEE, Jong Hyuk, 34124 Daejeon (KR); KANG, Kyeong Hyeon, 34124 Daejeon (KR); KIL, Hyo Shik, 34124 Daejeon (KR)
(74) Representative: Stolmár & Partner Patentanwälte PartG mbB

(57) **Abstract**

Anode active materials for secondary batteries, anodes that include the anode active materials, and secondary batteries that include the anodes are disclosed. In an embodiment, an anode active material for a secondary battery may include a plurality of core particles, and one or more coating layers including lithium salt, each coating layer formed on a surface of at least one of the plurality of core particles.

## Description

### TECHNICAL FIELD

The technology disclosed in this patent document generally relates to an anode active material for a secondary battery, an anode including the same, and a secondary battery including the same.

### BACKGROUND

Recently, with the development of technology and increasing demand for mobile devices, the demand for batteries as an energy source is rapidly increasing, and accordingly, research is being conducted on batteries that can meet various needs. In particular, research is being actively conducted on lithium secondary batteries with high energy density and excellent lifespan and cycle characteristics as a power supply for such a device.

### SUMMARY

The disclosed technology can be implemented in some embodiments to suppress the migration of a binder by coating an anode active material with a material having high affinity with the binder, and to improve the adhesion between an anode current collector and an anode active material layer.

The disclosed technology can be implemented in some embodiments to provide a secondary battery that can exhibit high reversible capacity and excellent battery capacity and battery performance.

In an aspect of the disclosed technology, an anode active material for a secondary battery includes: core particles; and a coating layer containing a lithium salt, and formed on a surface of the core particles.

In some embodiments of the disclosed technology, an anode active material for a secondary battery may include a plurality of core particles, and one or more coating layers including lithium salt, each coating layer formed on a surface of at least one of the plurality of core particles.

The core particles may include a graphite-based active material, a silicon-based active material, or a mixture thereof.

A content of the coating layer may be 0.05 to 5.0% by weight based on a total of 100% by weight of the anode active material.

The lithium salt may be at least one of lithium benzoate, LiI, LiCl, LiF, Li₃PO₄, LiBO₂, LiIO₂, Li₂CO₃, Li₂B₄O₃, or Li₂SO₄.

The coating layer may include at least one of polyvinyl alcohol (PVA), polyethylene oxide (PEO), carbonylmethylcellulose (CMC), polyvinylidene fluoride (PVDF), polyacrylonitrile (PAN), polyimide (PI), crown ether, ascorbic acid, B₂O₃, or Al(NO₃)₃.

In an aspect of the disclosed technology, an anode for a secondary battery includes : an anode current collector; and an anode active material layer formed on at least one surface of the anode current collector, and including the anode active material and a binder.

The binder may be at least one of SBR, CMC, PVA, PEO, PVDF, or Polyacrylic Acid (PAA).

The anode active material layer may have an absolute value of a slope of distribution of a binder measured according to a scanning electron microscopy (SEM_- Osmium (Os) analysis method of 0.009 or less.

In an aspect of the disclosed technology, a secondary battery includes: a cathode; the anode for a secondary battery; and an electrolyte.

### BRIEF DESCRIPTION OF DRAWINGS

The above and other aspects, features, and advantages of the disclosed technology will be more clearly understood from the following detailed description, taken in conjunction with the accompanying drawings.
FIG. 1A is a schematic cross-sectional view illustrating an anode for a secondary battery based on an embodiment.
FIG. 1B is a schematic cross-sectional view illustrating an anode for a secondary battery based on an embodiment.
FIG. 2 is a SEM image of a cross-section of the anode active material layer of Example 1 and a graph measuring a content of the Os element by EDS.
FIG. 3 is a SEM image of a cross-section of the anode active material layer of Example 2 and a graph measuring a content of the Os element by EDS.
FIG. 4 is a SEM image of a cross-section of the anode active material layer of Example 3 and a graph measuring a content of the Os element by EDS.
FIG. 5 is a SEM image of a cross-section of the anode active material layer of Example 4 and a graph measuring a content of the Os element by EDS.
FIG. 6 is a SEM image of a cross-section of the anode active material layer of Example 5 and a graph measuring a content of the Os element by EDS.
FIG. 7 is a SEM image of a cross-section of the anode active material layer of Example 6 and a graph measuring a content of the Os element by EDS.
FIG. 8 is a SEM image of a cross-section of the anode active material layer of Example 7 and a graph measuring a content of the Os element by EDS.
FIG. 9 is a SEM image of a cross-section of the anode active material layer of Example 8 and a graph measuring a content of the Os element by EDS.
FIG. 10 is a SEM image of a cross-section of the anode active material layer of Example 9 and a graph measuring a content of the Os element by EDS.
FIG. 11 is a SEM image of a cross-section of the anode active material layer of Comparative Example 1 and a graph measuring a content of the Os element by EDS.
FIG. 12 is a graph comparing the reversible capacity of Example 1 and Comparative Example 1 based on an embodiment.

### DETAILED DESCRIPTION

Section headings are used in the present document only for ease of understanding and do not limit scope of the embodiments to the section in which they are described.

Hereinafter, some example embodiments of the disclosed technology will be described with reference to the accompanying drawing. However, the disclosed technology is not limited to the embodiments described below, and other implementations, enhancements and variations can be made based on what is described below.

A lithium secondary battery refers to a battery that includes a cathode including a cathode active material capable of intercalation/deintercalation of lithium ions, an anode including an anode active material capable of intercalation/deintercalation of lithium ions, and a non-aqueous electrolyte containing lithium ions in an electrode assembly in which a microporous separator is interposed between the cathode and the anode.

When performing a drying (or drying and rolling) operation of secondary battery electrodes, due to the evaporation of a low-viscosity solvent and the migration of a small-diameter spherical binder that moves to a surface of an electrode active material layer, a concentrate thereof increases due to a flow of the low-viscosity solvent depending on the evaporating solvent, and thus the resistance of the manufactured electrode increases.

In other words, the resistance undesirably increases as the binder, which should play a binding role inside the electrode, is exposed to the surface of the electrode. This problem reduces fast charging performance and can cause lithium dendrite formation, ultimately reducing lifespan characteristics.

The disclosed technology can be implemented in some embodiments to prevent migration, ensure excellent adhesion between the electrode active material layer and the current collector, and reduce the resistance increase by distributing the binder uniformly only inside the electrode and by preventing the binder from adhering to the surface during the electrode manufacturing process.

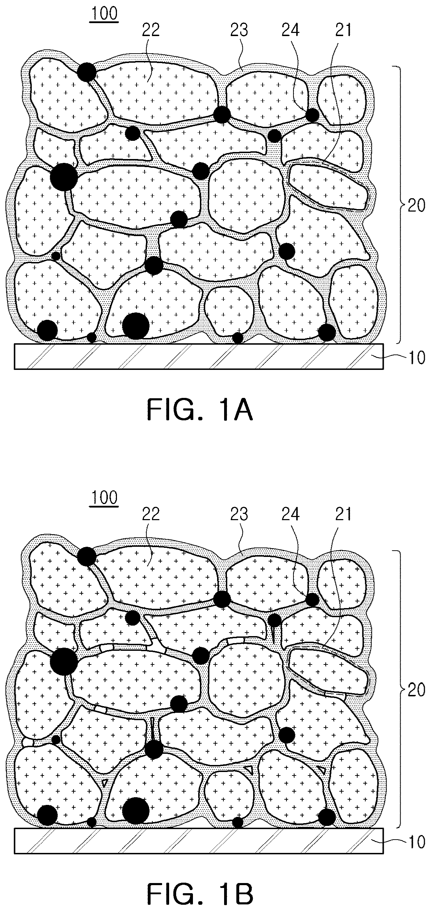

FIGS. 1A and 1B illustrate an example of an anode for a secondary battery based on an embodiment. In some implementations, as shown in FIG. 1A, particles of an anode active material 21 included in an anode active material layer 20 may include a coating layer 23 that is formed on or covers an outer surface of each of core particles 22. In some implementations, as shown in FIG. 1B, a portion of a particle of the anode active material 21 included in the anode active material layer 20 may include a coating layer 23 such that the coating layer 23 is formed on a portion of the outer surface of the core particles 22.

Referring to FIGS. 1A and 1B, the anode for a secondary battery of an embodiment may include an anode current collector 10, and an anode active material layer 20 that is formed on at least one surface of the anode current collector 10 and includes the anode active material and a binder 24.

The anode active material 21 may include a plurality of core particles 22 and one or more coating layers 23 that include at least a compound that includes lithium such as a lithium salt. In some implementations, a coating layer is formed on a surface of a core particle 22. In one example, a coating layer covers a surface of a core particle. In another example, a coating layer partially covers a surface of a core particle. In some implementations, a coating layer is formed on surfaces of a plurality of core particles. In one example, a coating layer covers surfaces of the plurality of core particles. In another example, a coating layer partially covers surfaces of plurality of core particles.

The core particles 22 may be the main particles that can provide substantial anodic activity. The core particles 22 may include a graphite-based active material, a silicon-based active material, or a mixture thereof.

In some implementations, the graphite-based active materials may include one or more of a natural graphite, artificial graphite, carbon black, acetylene black, Ketjen black, amorphous carbon fine powder, coke powder, meso-phase carbon, vapor phase grown carbon fiber, pitch-based carbon fiber, polyacrylonitrile-based carbon fiber, or others, and may be at least one selected from the group consisting of natural graphite, artificial graphite, carbon black, acetylene black, Ketjen black, amorphous carbon fine powder, coke powder, meso-phase carbon, vapor phase grown carbon fiber, pitch-based carbon fiber, polyacrylonitrile-based carbon fiber, and others, and may specifically include artificial graphite and/or natural graphite, but the disclosed technology is not limited thereto.

The silicon-based active material may include one or more of silicon (Si), silicon alloy, SiOₓ (0<x<2), SiOₓ(0<x<2) including lithium or magnesium compounds, or others, and may be at least one selected from the group consisting of silicon (Si), silicon alloy, SiOₓ (0<x<2), SiOₓ (0<x<2) including lithium or magnesium compounds, and others, and may specifically include SiOₓ (0<x<2), but the disclosed technology is not limited thereto.

In an embodiment, the core particles 22 may include a silicon-carbon based active material. The silicon-carbon based active material may include, for example, silicon carbide (SiC) or silicon-carbon particles having a core-shell structure.

The anode active material 21 implemented based on an embodiment may include a core particle 22 and a coating layer 23 formed on a surface of the core particle 22. For example, the coating layer 23 may be formed on an entire outer surface of the core particle 22. As another example, the coating layer 23 may be formed on a portion of the outer surface of the core particle 22.

Referring to the cross-sectional view of FIG. 1B, the anode active material layer 20 based on an embodiment may include at least one or more first core particles 22, one or more second core particles 22, or one or more third core particles 22. In some implementations, a coating layer 23 is formed on a first core particle 22, and a coating layer 23 is formed on only a portion of the coating layer 23, and a coating layer 23 is not formed on the one or more third core particles 22.

The anode active material layer 20 may include at least one of: an anode active material 21 in which only a portion of outer surfaces of the core particles 22 is coated with one or more coating layers 23; or an anode active material 21 in which the entire outer surfaces of the core particles 22 are coated with one or more coating layers 23.

In some implementations, the coating layer 23 may contain a compound that includes lithium such as a lithium salt. The lithium salt is a material with a high affinity with a binder 24, and may include or may be at least one of lithium benzoate, LiI, LiCl, LiF, Li₃PO₄, LiBO₂, LiIO₂, Li₂CO₃, Li₂B₄O₇, Li₂SO₄, or others. In some implementations, for example, more specifically, the lithium salt may be lithium benzoate.

The anode active material 21 containing the lithium salt may have high affinity with the binder 24. When an anode slurry that includes the anode active material 21 including the coating layer 23 is dried, the attractive force between the binder and a coating material may be stronger than the attractive force between the binder and the evaporated moisture, thereby preventing movement of the binder 24 within the anode active material layer 20, and even after drying the anode slurry, the binder 24 in the anode active material layer 20 may be evenly distributed without a concentration gradient.

In some implementations, the coating layer 23 may further include a material in addition to the lithium salt described above, and may further include at least one material of, for example, polyvinyl alcohol (PVA), polyethylene oxide (PEO), carbonylmethylcellulose (CMC), polyvinylidene fluoride (PVDF), polyacrylonitrile (PAN) and polyimide (PI), crown ether, ascorbic acid, B₂O₃, Al(NO₃)₃, or others, and specifically, may further include at least one material of polyvinyl alcohol (PVA), polyethylene oxide (PEO), crown ether, B₂O₃, Al(NO₃)₃, or others. As the coating layer 23 further includes more materials, the affinity between the anode active material 21 and the binder 24 may be further increased.

In some implementations, the coating layer 23 may be in the form of a flat film formed on a surface of the core particles 22, or may be in the form of fine particles gathered to form a coating layer, but the disclosed technology is not limited thereto. The form of the flat film may indicate that the coating layer 23 on the surface of the particles has a film-like form.

A content of the coating layer 23 may be 0.05% or more by weight, specifically 0.1% or more by weight, more specifically 0.2% or more by weight, and 5.0% or less by weight, specifically 4.0% or less by weight, and more specifically 3.0% or less by weight, based on a total of 100% by weight of the anode active material 21. When the content of the coating layer 23 is less than the above-described range, the affinity of the anode active material 21 with the binder 24 is low, and it may be difficult to prevent migration of the binder 24. When the content of the coating layer 23 exceeds, an amount of active material in the electrode may decrease, thereby reducing energy density, and the coating layer 23 may also act as a resistor, which may deteriorate battery performance.

A coating layer 23 of the core particles 22 of the anode active material 21 based on an embodiment may be formed by a conventional method, but the coating layer 23 may be formed, for example, according to a method described below.

In an embodiment, core particles 22 including the graphite-based active material, the silicon-based active material, and the mixtures of the graphite-based active material and the silicon-based active material may be formed, and then a coating layer 23 may be formed on the core particles 22.

The coating layer 23 may be coated using a conventional coating method, but may be formed using, for example, a wet coating method. For example, a lithium salt solution may be formed by mixing a solution containing the above-described lithium salt with the core particles 22 and then stirring the same. Thereafter, the lithium salt may be fixed to the core particles 22 through heat treatment or drying to form a coating layer 23.

In this case, the coating layer 23 may further include a material in addition to the lithium salt described above, and may further include at least one of, for example, polyvinyl alcohol (PVA), polyethylene oxide (PEO), carbonylmethylcellulose (CMC), polyvinylidene fluoride (PVDF), polyacrylonitrile (PAN) and polyimide (PI), crown ether, ascorbic acid, B₂O₃, Al(NO₃)₃, or others. As the coating layer 23 further includes materials, the affinity between the anode active material 21 and the binder 24 may be further increased.

The anode for a secondary battery based on an embodiment may include an anode current collector 10 and an anode active material layer 20 formed on at least one surface of the anode current collector 10, and including the core particles 22 and the coating layer 23 described above.

In some implementations, the anode current collector 10 may include stainless steel, nickel, aluminum, titanium, copper, or alloys of one or more of stainless steel, nickel, aluminum, titanium, or copper. For example, the anode current collector 10 may include aluminum or an aluminum alloy.

The anode active material layer 20 may include the anode active material 21 implemented based on some embodiments of the disclosed technology and a binder 24, and may further include a conductive material.

Referring to FIGS. 1A and 1B, the binder 24 implemented based on an embodiment is adhered to a coating layer 23. The binder may be uniformly distributed within the anode active material layer 20, thereby preventing binder migration.

In some implementations, the binder 24 may be a small-diameter spherical binder 24. In an example, the small-diameter spherical binder 24 may be at least one of styrene-butadiene rubber (SBR), polyethylene oxide (PEO), polyvinyl alcohol (PVA), polyvinylidene fluoride (PVDF), or Polyacrylic Acid (PAA), and may be, for example, a styrene-butadiene rubber (SBR) . The binder 24 may be used with a thickening agent such as carboxymethyl cellulose (CMC).

The conductive material may be included to promote electron transfer between active material particles. For example, the conductive material may include a carbon-based conductive material such as graphite, carbon black, graphene, carbon nanotubes, and others, and/or a metal-based conductive material such as tin, tin oxide, titanium oxide, a perovskite material such as tin, tin oxide, titanium oxide, LaSrCoO₃, LaSrMnO₃, and others.

In an embodiment, the distribution of the binder 24 included in the anode active material layer 20 may be measured according to a scanning electron microscope (SEM)-Osmium (Os) analysis method using a scanning electron microscope (SEM).

The SEM-Os analysis method is an analysis method using a property that an Os element is attached to a binder. In some implementations, after the Os element is impregnated or deposited on the anode by vaporization, Os is attached to the binder 24, such as SBR contained in an anode active material layer 20, and the anode active material layer 20 may be imaged using an SEM to check the distribution of the Os element, so that the distribution of the binder 24 included in the anode active material layer 20 may be confirmed. The experimental results captured using the SEM-Os analysis method may be subjected to linear regression analysis (Linear fit) using an Origin program to determine the distribution slope of the binder 24. The closer the absolute value of the slope of the derived straight line to 0, the more evenly the binder 24 is distributed on upper and lower surfaces of the anode active material layer 20.

The anode active material layer 20 implemented based on an embodiment may have an absolute value of the slope of the straight line derived from the distribution of the binder 24 measured by SEM-Os analysis of 0.009 or less, specifically 0.007 or less, and more specifically 0.005 or less. When the slope of the distribution of the binder 24 is within the above-described range, the distribution of the binder 24 of the anode active material layer 20 may be considered to be evenly distributed on the surface of the anode and the surface of the anode active material layer 20.

In an embodiment, a secondary battery may include a cathode, the anode implemented based on some embodiments of the disclosed technology, and an electrolyte . In addition, the secondary battery may further include a separator interposed between the cathode and the anode.

The secondary battery implemented based on an embodiment may exhibit excellent performance by maintaining a high reversible capacity of the battery due to a reduction in resistance due to the even distribution of the binder 24.

In some implementations, a cathode active material of the cathode may include lithium-transition metal oxide such as lithium cobalt oxide (LiCoO₂), lithium manganese oxide (LiMn₂O₄), lithium nickel oxide (LiNiO₂), or others, or lithium-transition metal complex oxide in which a portion of these transition metals are substituted into other transition metals. Specifically, the lithium-transition metal complex oxide may be an NCM-based cathode active material represented by a chemical formula LiₓNiₐCo_{b}Mn_{c}Al_{d}O_{y}(0<x≤1.1, 2≤y≤2.02, 0<a<1, 0<b<1, 0<c<1, 0<d<1, 0<a+b+c+d≤1). In addition, the cathode active material may be a lithium iron phosphate (LFP)-based cathode active material represented by a chemical formula of LiFePO₄.

The separator is not particularly limited, and may be selected from glass fiber, polyester, polyethylene, polypropylene, polytetrafluoroethylene, or a combination thereof, may be in the form of non-woven fabric or woven fabric, and may optionally have a single-layer or multilayer structure.

The electrolyte includes a non-aqueous organic solvent and electrolytic salt. The non-aqueous organic solvents may include ethylene carbonate (EC), propylene carbonate (PC), dimethyl carbonate (DMC), diethyl carbonate (DEC), ethylmethyl carbonate (EMC), 1,2-dimethoxyethene (DME), γ-butyrolactone (BL), tetrahydrofuran (THF), 1,3-dioxolane (DOL), diethyl ether (DEE), methyl formate (MF), methylpropionitrate (MP), sulfolane (S), dimethyl sulfoxide (DMSO), acetonitrile (AN), or mixtures thereof, but is not limited thereto. The electrolytic salt is a substance that is dissolved in a non-aqueous organic solvent and acts as a source of electrolytic metal ions within the battery, enabling the basic operation of a secondary battery and promoting the movement of electrolytic metal ions between the cathode and the anode. As a non-limiting example, when the electrolytic metal is lithium, the electrolytic salt may be LiPF₆, LiBF₄, LiTFSI, LiSbF₆, LiAsF₆, LiClO₄, LiCF₃SO₃, Li(CF₃SO₂)₂N, LiC₄F₉SO₃, LiSbF₆, LiAlO₄, LiAlCl₄, LiN(CₓF₂ₓ₊₁SO₂)(C_{y}F_{2y+1}SO₂) (where x and y are natural numbers), LiCl, LiI, or a mixture thereof, but the disclosed technology is not limited thereto. In addition, the electrolytic salt may use a known material in a concentration suitable for the purpose, and may further include a known solvent or additive to improve charge/discharge characteristics, flame retardancy characteristics, and others, if necessary.

### Example

Hereinafter, Examples will be described in detail. The following Examples are only intended to aid understanding of some embodiments of the disclosed technology, and the disclosed technology is not limited to what is discussed below.

### Manufacturing Example

### 1. Example 1

### (1) Manufacturing of anode active material

A lithium salt solution was prepared by mixing distilled water and lithium benzoate at a weight ratio of 90:10.

Core particles in which artificial graphite and natural graphite were mixed at a weight ratio of 7:3 and lithium benzonate contained in the above-described lithium salt solution were mixed at a weight ratio of 99.5:0.5 and the above-described lithium salt solution was added to the core particles. Thereafter, the above-described mixture was added to a mixer along with distilled water so that a solid content of the above-described mixture was 70% by weight, and mixed for 1 hour at a stirring speed of 20Hz. The above-described mixture was dried overnight under vacuum through a vacuum line to prepare an anode active material in which graphite core particles were coated with a coating layer containing lithium salt.

### (2) Manufacturing of anode

An anode slurry was prepared by mixing the above-described anode active material, SBR, and CMC at a weight ratio of 97.3:1.2:1.5. The anode slurry was applied on front and rear surfaces of a Cu foil, then dried and rolled to prepare an anode including an anode active material layer having mixture density of 12.8 mg/cm² and 1.68 g/cc.

### (3) Manufacturing of secondary battery

A slurry containing an NCM-based active material, which is a Li-transition metal complex oxide, was applied and dried on an aluminum foil to prepare a cathode, and a secondary battery cell prepared by interposing a polyolefin separator between the cathode and the anode prepared above was inserted into a coin cell for a secondary battery, and then an electrolyte containing 1M of LiPF₆ dissolved in a solvent mixed with ethylene carbonate (EC) and diethyl carbonate (DEC) was injected into a coin for the secondary battery to prepare a secondary battery in a form of a coin cell.

### 2. Example 2

An anode electrode active material was prepared in the same manner as in Example 1, except that the above-described core particles, lithium benzoate, PVA, and B₂O₃ were prepared at a weight ratio of 99.4:0.5:0.085:0.015.

An anode including the anode active material and a secondary battery were prepared in the same manner as Example 1.

### 3. Example 3

An anode active material was prepared in the same manner as in Example 1, except that the same core particles, lithium benzoate, and PEO as in Example 1 were prepared at a weight ratio of 99.3:0.5:0.2.

An anode including the anode active material and a secondary battery were prepared in the same manner as Example 1.

### 4. Example 4

An anode active material was prepared in the same manner as in Example 1, except that the above-described core particles, lithium benzoate, and ascorbic acid were prepared at a weight ratio of 99.3 : 0.5 : 0.2.

An anode including the anode active material and a secondary battery were prepared in the same manner as Example 1.

### 5. Example 5

An anode active material was prepared in the same manner as in Example 1, except that the above-described core particles, lithium benzoate, and Al(NO₃)₃ were prepared at a weight ratio of 99.3 : 0.5 : 0.2.

An anode including the anode active material and a secondary battery were prepared in the same manner as Example 1.

### 6. Example 6

An anode active material was prepared in the same manner as in Example 1, except that the above-described core particles, lithium benzoate, and crown ether were prepared at a weight ratio of 99.3 : 0.5 : 0.2.

An anode including the anode active material and a secondary battery were prepared in the same manner as Example 1.

### 7. Example 7

A lithium salt solution was prepared by mixing distilled water and lithium iodide at a weight ratio of 90:10.

Thereafter, an anode active material was prepared in the same manner as in Example 1, except that the same core particles as in Example 1 and LiI contained in the prepared lithium salt solution were prepared at a weight ratio of 99.8:0.2.

An anode including the anode active material and a secondary battery were prepared in the same manner as Example 1.

### 8. Example 8

A lithium salt solution was prepared by mixing distilled water and Li₂CO₃ at a weight ratio of 90:10.

Thereafter, an anode active material was prepared in the same manner as in Example 1, except that the same core particles as in Example 1 and Li₂CO₃ contained in the prepared lithium salt solution were prepared at a weight ratio of 99.8:0.2.

An anode including the anode active material and a secondary battery were prepared in the same manner as Example 1.

### 9. Example 9

A lithium salt solution was prepared by mixing distilled water and LiBO₂ at a weight ratio of 90:10.

Thereafter, an anode active material was prepared in the same manner as in Example 1, except that the same core particles as in Example 1 and LiBO₂ contained in the prepared lithium salt solution were prepared at a weight ratio of 99.8:0.2.

An anode including the anode active material and a secondary battery were prepared in the same manner as Example 1.

### 10. Comparative Example 1

The core particles of Example 1 were used as an anode electrode active material.

An anode slurry was prepared by mixing the above-described core particles, SBR, and CMC at a weight ratio of 97.3:1.2:1.5. The anode slurry was applied on a Cu foil, dried and rolled to prepare an anode including an anode active material layer with a mixture density of 12.8 mg/cm² and 1.68 g/cc.

In addition, a slurry containing an NCM-based active material, which is a Li-transition metal complex oxide, was applied and dried on an aluminum foil, to prepare a cathode.

A secondary battery cell prepared by interposing a polyolefin separator between the cathode and the anode prepared above was placed in a coin cell for a secondary battery, and an electrolyte in which 1M of LiPF6 is dissolved in a solvent mixed with ethylene carbonate (EC) and diethyl carbonate (DEC) into the coin for the secondary battery, to prepare a secondary battery in the form of a coil cell.

### Evaluation Example

### 1. Measurement of distribution of binder of anode active material layer

In the anodes prepared in Example 1 to 9 and Comparative Example 1, an Os element was attached to an SBR binder included in an anode active material layer by impregnating the Os element in a liquid or depositing the Os element by vaporization.

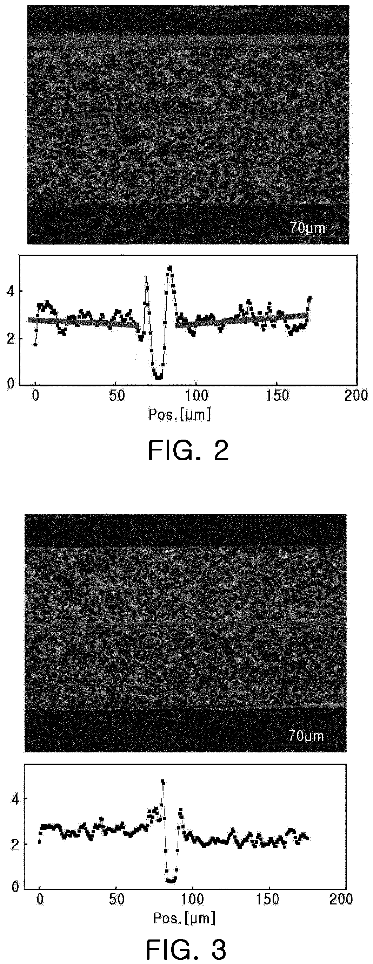

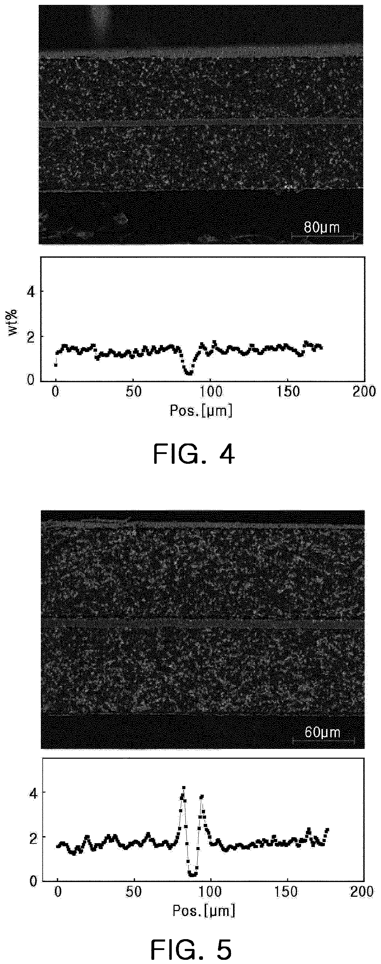

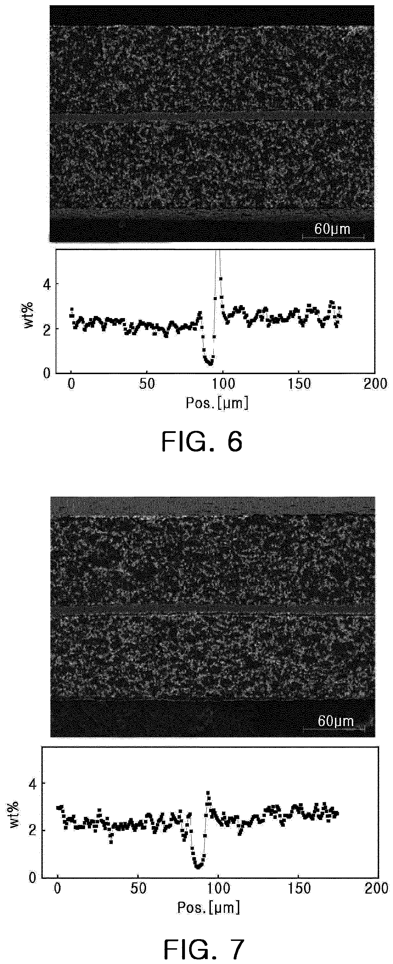

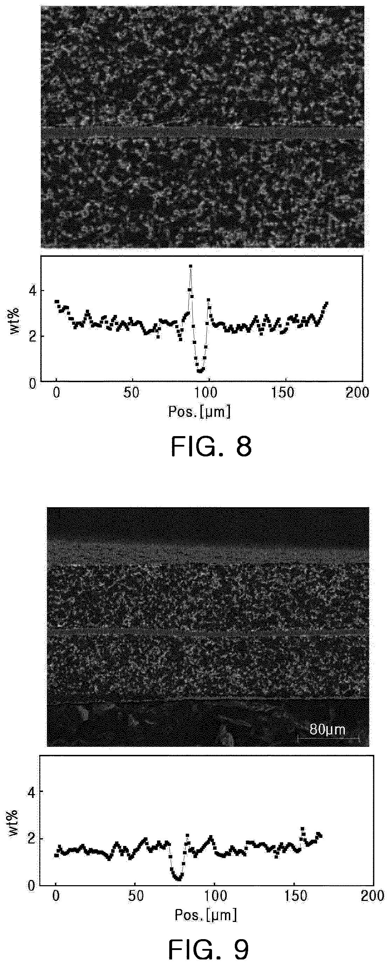

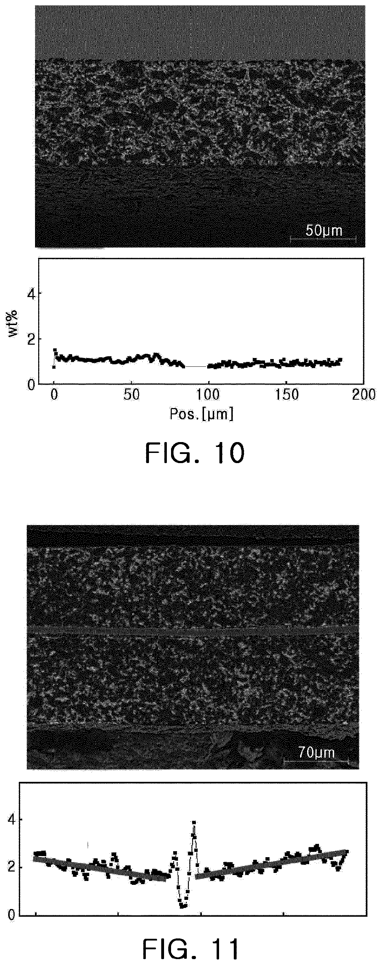

Thereafter, a content of the Os element included in a front surface and a back surface of the anode active material layer prepared in Examples 1 to 9 and Comparative Example 1 was measured, using energy-dispersive X-ray spectroscopy (EDS) of a scanning electron microscope (SEM), and an SEM image thereof was illustrated in FIGS. 2 to 11, respectively.

In addition, an Os element content distribution graph of the anode of Examples 1 to 9 and Comparative Example 1 was derived as a straight line using Origin's linear regression analysis (linear fit), and an absolute value of a slope thereof was calculated and illustrated in Table 1 below. In addition, the Os element content distribution graph thereof was illustrated in FIGS. 2 to 11, respectively.

### 2. Measurement of adhesion of anode active material layer

A tape (18 mm × 10 cm) was attached to an upper surface of the anode active material layer of Examples 1 to 9 and Comparative Example 1, and a force when removing the tape was measured, which was shown in Table 1 below.

### 3. Measurement of reversible capacity

The secondary batteries of Examples 1 to 9 and Comparative Example 1 were charged/discharged at 0.1C/0.1C, and the reversible capacity was measured by dividing capacity (mAh) during discharging by a mass of the active material inside the electrode, which was shown in Table 1 below.

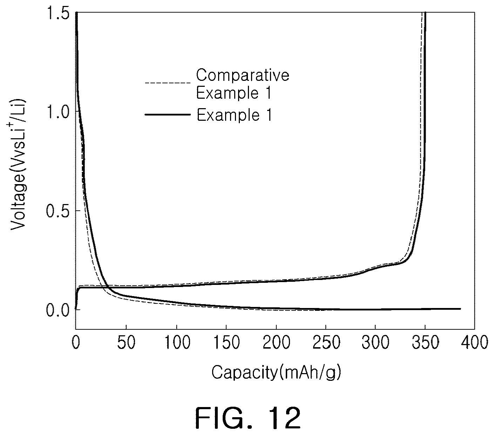

In addition, the reversible capacity graph of Example 1 and Comparative Example 1 was shown in FIG. 12.

**[Table 1]**

| | Absolute value of front slope | Absolute value of rear slope | Adhesion(N) | Reversible capacity(mAh) |
|---|---|---|---|---|
| Example 1 | 0.0045 | 0.0047 | 0.66 | 348.87 |
| Example 2 | 0.0017 | 0.0005 | 0.54 | 345.97 |
| Example 3 | 0.0005 | 0.0014 | 0.64 | 346.97 |
| Example 4 | 0.0031 | 0.0036 | 0.4 | 347.86 |
| Example 5 | 0.0020 | 0.0033 | 0.48 | 347.91 |
| Example 6 | 0.0029 | 0.0003 | 0.62 | 347.80 |
| Example 7 | 0.0036 | 0.0037 | 0.7 | 343.98 |
| Example 8 | 0.0048 | 0.0049 | 0.45 | 349.08 |
| Example 9 | 0.0016 | 0.0012 | 0.55 | 344.93 |
| Comparative Example 1 | 0.0096 | 0.0100 | 0.32 | 343.81 |

Referring to Table 1, it can be confirmed that an absolute value of a slope of distribution of an Os element content with respect to the distribution of a binder of the anode active material layer of Examples 1 to 9 was 0.009 or less. On the other hand, it can be confirmed that an absolute value of a slope of distribution of the Os element content in Comparative Example 1 exceeded 0.009. This means that while a binder included in the anode active material layer of Examples 1 to 9 was evenly distributed, the binder included in the anode active material layer of Comparative Example 1 was not evenly distributed.

Referring to Table 1, it can be confirmed that the anode active material layers of Examples 1 to 9 had superior adhesion as compared to the anode active material layer of Comparative Example 1. It can be determined that the greater the adhesion of the anode active material layer, the more difficult it is to remove the anode active material layer from an anode current collector. Referring to Table 1, it can be confirmed that the reversible capacity of the secondary battery of Examples 1 to 9 was higher than the reversible capacity of the secondary battery of Comparative Example 1. This means that in a secondary battery containing an anode active material in which a coating layer containing lithium salt is coated with core particles, it can be confirmed that binder migration is reduced due to even distribution of the binder, which reduces the resistance within the electrode and increases the reversible capacity of the electrode.

As set forth above, the anode active materials for secondary batteries implemented based on some embodiments of the disclosed technology can improve the adhesion between an anode current collector and an anode active material and suppress migration of a binder.

Secondary batteries that include the anode active materials implemented based on some embodiments of the disclosed technology can exhibit high reversible capacity and excellent battery capacity and battery performance.

Only a few implementations and examples are described and other implementations, enhancements and variations can be made based on what is described and illustrated in this patent document.

## Claims

1. An anode active material for a secondary battery, comprising:
a plurality of core particles; and
one or more coating layers including a lithium salt, each coating layer formed on a surface of at least one of the plurality of core particles.

2. The anode active material of claim 1, wherein the core particles include a graphite-based active material, a silicon-based active material, or a mixture of the graphite-based active material and the silicon-based active material.

3. The anode active material of claim 1 or 2, wherein a content of the coating layer is 0.05 to 5.0% by weight based on 100% by weight of the anode active material.

4. The anode active material of any of claims 1 to 3, wherein the lithium salt includes at least one of lithium benzoate, LiI, LiCl, LiF, Li₃PO₄, LiBO₂, LiIO₂, Li₂CO₃, Li₂B₄O₇, or Li₂SO₄.

5. The anode active material of any of claims 1 ro 4, wherein the coating layer comprises at least one of polyvinyl alcohol (PVA), polyethylene oxide (PEO), carbonylmethylcellulose (CMC), polyvinylidene fluoride (PVDF), polyacrylonitrile (PAN), polyimide (PI), crown ether, ascorbic acid, B₂O₃, or Al(NO₃)₃.

6. An anode for a secondary battery, comprising:
an anode current collector; and
an anode active material layer formed on at least one surface of the anode current collector, and including an anode active material, and a binder,
wherein the anode active material comprises:
a plurality of core particles; and
one or more coating layers including a compound that includes lithium, each coating layer formed on a surface of at least one of the plurality of core particles.

7. The anode of claim 6, wherein the binder is at least one of a styrene-butadiene rubber (SBR), polyethylene oxide (PEO), polyvinyl alcohol (PVA), polyvinylidene fluoride (PVDF), or Polyacrylic Acid (PAA) .

8. The anode of claim 6 or 7, wherein the anode active material layer has an absolute value of a slope of distribution of a binder measured according to an SEM-Os analysis method of 0.009 or less.

9. The anode of any of claims 6 to 8, wherein the core particles include a graphite-based active material, a silicon-based active material, or a mixture of the graphite-based active material and the silicon-based active material.

10. The anode of any of claims 6 to 9, wherein a content of the coating layer is 0.05 to 5.0% by weight based on 100% by weight of the anode active material.

11. The anode of any of claims 6 to 10, wherein the lithium salt is at least one of lithium benzoate, LiI, LiCl, LiF, Li₃PO₄, LiBO₂, LiIO₂, Li₂CO₃, Li₂B₄O₇, or Li₂SO₄.

12. The anode of any of claims 6 to 11, wherein the coating layer comprises at least one of polyvinyl alcohol (PVA), polyethylene oxide (PEO), carbonylmethylcellulose (CMC), polyvinylidene fluoride (PVDF), polyacrylonitrile (PAN), polyimide (PI), crown ether, ascorbic acid, B₂O₃, or Al(NO₃)₃.

13. A secondary battery, comprising:
a cathode;
an anode of any of claims 6 to 12; and
an electrolyte.
